# EUROPEAN PATENT SPECIFICATION

(11) **EP 3 537 561 B1**
(45) Date of publication and mention of the grant of the patent: **23.08.2023**
(21) Application number: 18160162.6
(22) Date of filing: 06.03.2018
(51) Int. Cl.: H02J 7/00

(54) **LOAD CONTROL SYSTEM**
LASTKONTROLLSYSTEM
SYSTÈME DE RÉGULATION DE CHARGE

(43) Date of publication of application: 11.09.2019
(73) Proprietor: Grand Mate Co., Ltd., Taichung City 401 (TW)
(72) Inventor: HUANG, Chung-Chin, 401 Taichung City (TW); HUANG, Chin-Ying, 401 Taichung City (TW); HUANG, Hsin-Ming, 401 Taichung City (TW); HUANG, Hsing-Hsiung, 401 Taichung City (TW); YEH, Yen-Jen, 412 Taichung City (TW); WANG, Chia-Yu, 402 Taichung City (TW)
(74) Representative: Viering, Jentschura & Partner mbB Patent- und Rechtsanwälte

(56) References cited:
- WO-A2-2011/055217
- US-A- 5 373 910
- US-A1- 2003 110 337
- US-A1- 2003 117 019
- US-A1- 2011 027 626

## Description

### BACKGROUND OF THE INVENTION

### 1. Technical Field

The present invention is related to a control system, and more particularly related to a load control system.

### 2. Description of Related Art

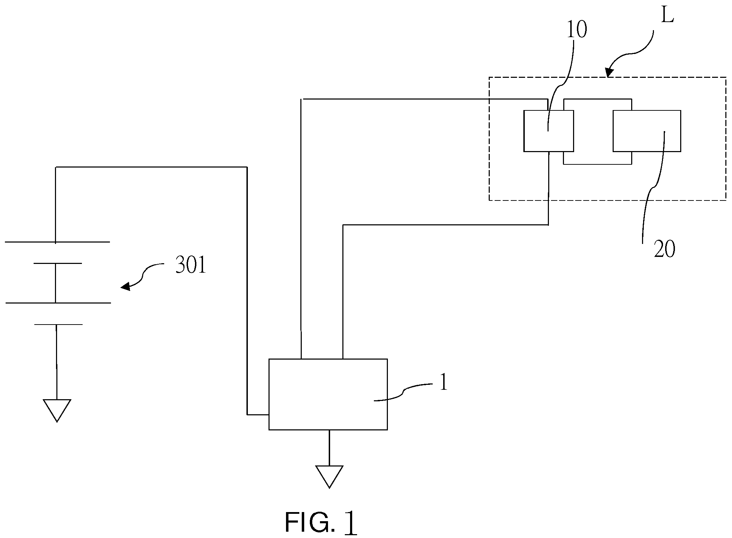

A load controller is adapted to control a load to switch on and off. Referring to FIG. 1, the load L is illustrated by an air conditioning system as an example, wherein the load L includes a switch 10 and a brake 20. When the switch 10 is triggered to be short-circuited, the brake 20 would operate to change room temperature; when the switch 10 is open-circuited, the brake 20 stops operating. The load controller 1 is usually connected to a battery pack 301 which is formed by a plurality of series-connected batteries and supplies the power to the load control ler 1 for operating. The load control ler 1 is adapted to control the switch 10 to be short-ci rcuited or open-ci rcuited so as to enable the brake 20 to operate or stop operating.

Since the load controller 1 is usually connected to only one battery pack 301 which has limited power, the electric quantity of the battery pack 301 would be run out by the load controller 1 after operation for a period of time, resulting in the inconvenience that a user needs to replace the battery frequently.

To increase the operating time of the load controller 1, some manufacturers in the industry would connect another battery pack 302 with the battery pack 301 in parallel to increase electric quantity (as shown in FIG. 2), thereby reducing the replacement frequency of the batteries. One example is WO2011055217.

Although the aforementioned parallel connected battery packs 301, 302 could increase electric quantity, however, when the voltages of the battery packs 301, 302 are not balanced with each other, the battery pack 301 or 302 which has a higher voltage would not only supply power to the load controller 1 but also recharge the other one of the battery pack 301 and 302 which has a lower voltage as well, resulting in unnecessary power consumption. In addition to unnecessary power consumption, the unbalanced voltage would also shorten the lifetime and decrease the efficiency of the battery packs 301, 302 easily, and even damage the battery packs 301, 302, thereby running out the electric quantity of the battery packs 301, 302 earlier.

### BRIEF SUM MARY OF THE INVENTION

In view of the above, the present invention is to provide a load control system and a control method thereof so as to reduce the replacement frequency of the batteries.

To achieve the object mentioned above, the present invention provides a load control system. The load control system is adapted to be connected to at least one first battery and at least one second battery and to control a load to switch between a first state and a second state. The load control system includes a power switching device and a control device, wherein the power switching device includes a first power input port, a second power input port and a power output port. The first power input port is electrically connected to the first battery and the second power input port is electrically connected to the second battery. The power switching device operates in one of a first switching mode and a second switching mode, and is controllable to operate in another one of the first switching mode and the second switching mode, wherein the first power input port and the power output port are in conduction with each other in the first switching mode, and the second power input port and the power output port are in conduction with each other in the second switching mode. The control device is electrically connected to the power output port to receive the power supplied from the power output port to operate; when the control device operates to receive a control signal, the control device would control the load to switch from one of the first state and the second state to another one of the first state and the second state according to the received control signal, and control the power switching device to switch from one of the first switching mode and the second switching mode to another one of the fi rst switching mode and the second switching mode.

The advantage of the present invention is that the control device could utilize the power of the first battery and the second battery respectively, thereby extending the respective usage time of the first battery and the second battery, and reducing the replacement frequency of the batteries as well.

### BRIEF DESCRIPTION OF THE SEVERAL VIEWS OF THE DRAWINGS

The present i nventi on will be best understood by referri ng to the folowing detailed description of some illustrative embodiments in conjunction with the accompanying drawings, in which:
FIG. 1 is a schematic view showing a connection configuration of a conventional load controller;

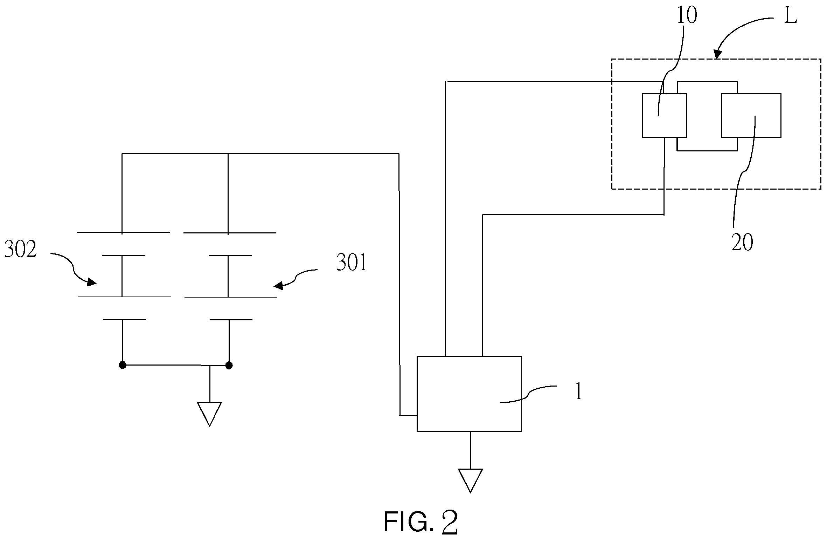

FIG. 2 is a schematic view showing a connection configuration of another conventional load controller;
FIG. 3 is a schematic view showing a connection configuration of a load control system of a first embodiment according to the present invention;
FIG. 4 is a schematic view showing that the power switching device of the fi rst embodi ment operates in a second switching mode;
FIG. 5 is a flowchart of a control method of the first embodiment;
FIG. 6 is a schematic view showing a connection configuration of a load control system of a second embodiment according to the present invention;
FIG. 7 is a schematic view showing a connection configuration of a load control system of a third embodiment according to the present invention; and
FIG. 8 is a schematic view showing a connection configuration of a load control system of a fourth embodi ment accordi ng to the present i nventi on.

### DETAILED DESCRIPTION OF THE INVENTION

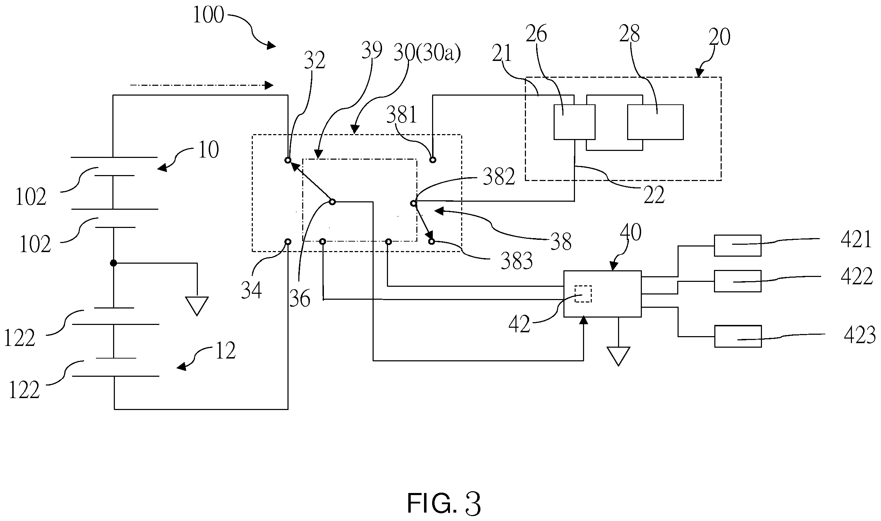

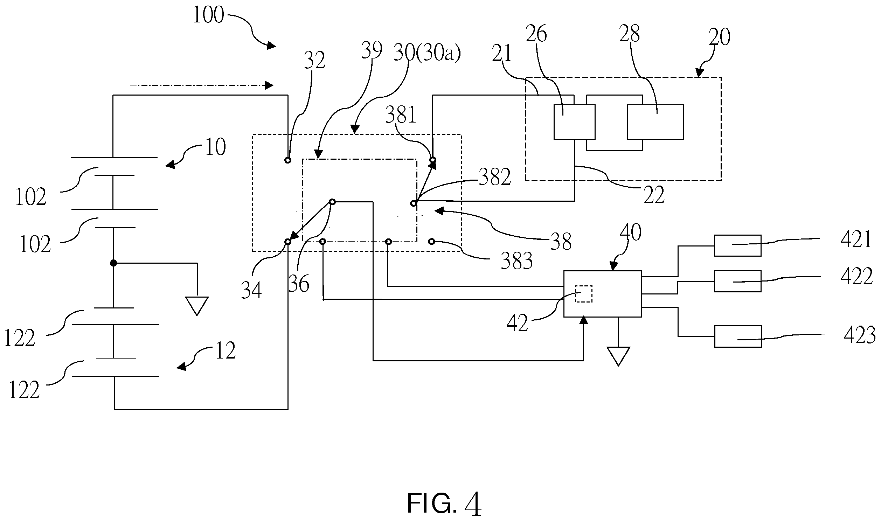

The following illustrative embodiments and drawings are provided to illustrate the disclosure of the present invention, these and other advantages and effects can be clearly understood by persons skilled in the art after reading the disclosure of this specification. As shown in FIG. 3 and FIG. 4, a load control system 100 of a first embodiment according to the present invention is adapted to be connected to a first battery pack 10 and a second battery pack 12 and to control a load 20 to switch between a first state and a second state. In this embodiment, the first battery pack 10 includes a plurality of series-connected first batteries 102, and the second battery pack 12 includes a plurality of series-connected second batteries 122; in practice, the first battery pack 10 could include at least one first battery 102, and the second battery pack 12 could include at least one second battery 122. In this embodiment, the load 20 operates with an independent power supply, and does not receive power from the first battery pack 10, the second battery pack 12 or the load control system 100; the first state of the load 20 is defined as an idle state as an example, and the second state of the load 20 is defined as an operation state as an example. In practice, the first state could also be defined as the operation state, and the second state could also be defined as the idle state.

The load 20 includes two connecting wires 21, 22 and is in the first state when the two connecti ng wi res 21, 22 are open-ci rcuited, and in the second state when the two connecting wires 21, 22 are short-circuited. In this embodiment, the load 20 is illustrated by an air conditioning system as an example, wherein the load 20 includes a switch 26 and a brake 28. The switch 26 is connected to the two connecting wires 21, 22. When the two connecting wires 21, 22 are open-circuited, the brake 28 stops operating (that is, the load 20 is in the first state); when the two connecting wires 21, 22 are short-circuited, the brake 28 would operate (that is, the load 20 is in the second state) to change room temperature.

The load control system 100 includes a power switching device 30 and a control device 40, wherein the power switching device 30 includes a first power input port 32, a second power input port 34 and a power output port 36. In this embodiment, the power switching device 30 includes a relay 30a comprising three contacts which form the fi rst power input port 32, the second power input port 34 and the power output port 36 respectively. In addition, the relay 30a further includes a control port 38 which includes a fi rst contact 381, a second contact 382 and a thi rd contact 383. The relay 30a includes a switching unit 39 which is controllable to enable the first power input port 32 and the power output port 36 to be in conduction with each other, the second power input port 34 and the power output port 36 to be open-circuited, the first contact 381 and the second contact 382 of the control port 38 to be open-ci rcuited, and the second contact 382 and the third contact 383 to be short-circuited, which defines the power switching device 30 as being operated in a first switching mode (as shown in FIG. 3). The switching unit 39 is controllable to enable the second power input port 34 and the power output port 36 to be in conduction with each other, the first power input port 32 and the power output port 36 to be open-ci rcuited, the fi rst contact 381 and the second contact 382 of the control port 38 to be short-circuited, and the second contact 382 and the third contact 383 to be open-circuited, which defines the power switching device 30 as being operated in a second switching mode (as shown in FIG. 4). The power switching device 30 only operates in the fi rst switching mode or in the second switching mode.

The first power input port 32 is electrically connected to one terminal (e.g., positive electrode) of the first battery pack 10; the second power input port 34 is electrically connected to one terminal (e.g., positive electrode) of the second battery pack 12, and the other terminals (e.g., negative electrodes) of the first battery pack 10 and the second battery pack 12 are electrically connected to each other. In this embodiment, only the first contact 381 and the second contact 382 of the control port 38 are utilized and the first contact 381 and the second contact 382 are electrically connected to the two connecting wires 21, 22 of the load 20 respectively. In practice, the second contact 382 and the third contact 383 also could be utilized to be electrically connected to the two connecting wires 21, 22 respectively.

The control device 40 includes a power input port 41, wherein a positive terminal of the power input port 41 is electrically connected to the power output port 36, and a negative terminal of the power input port 41 is electrically connected to another terminal (negative electrode) of the first battery pack 10 and the second battery pack 12 so as to receive the power supplied from the power output port 36 to operate; the power supplied from the power output port 36 is not supplied to the load 20. The control device 40 is electrically connected to the switching unit 39 to control the switching unit 39 to switch. The control device 40 includes a power detection module 42 to detect the power supplied from the power output port 36, for example, through detecting the voltage and/or the current. The power detection module 42 could include an analog-to-digital converter 42a. The control device 40 is connected to a display unit 421, a thermometer 422 and a control interface 423, wherein the display unit 421 is adapted to display state information, i.e., the operation state (power on/off), the power state of the first battery pack 10 or the second battery pack 12, the temperature detected by the thermometer 422; the control interface 423 is adapted to be operated by a user to generate a control signal for the control device 40. In practice, the control device 40 could also transmit the state information to mobile devices via wireless transmission or receive the control signal from the mobile devices.

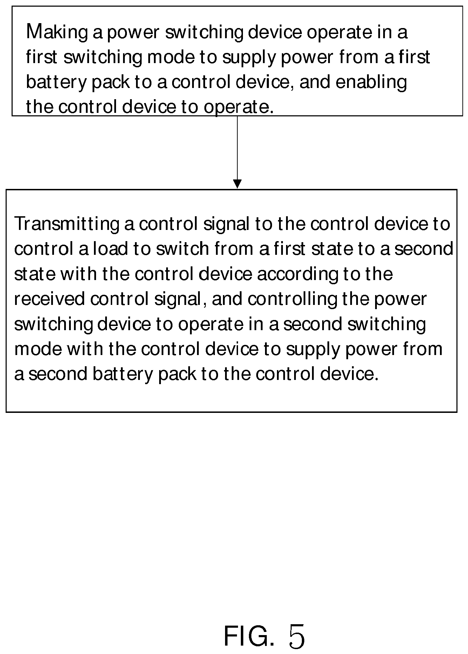

With the aforementioned configuration, a control method for the load control system of the first embodiment of the present invention would be described, wherein the method includes the following steps, as shown in FIG. 5.

First, making the power switching device 30 operate in the first switching mode to supply power from the first battery pack 10 to the control device 40, thereby enabling the control device 40 to operate. The fi rst contact 381 and the second contact 382 of the control port 38 are open-circuited and the load 20 is in the first state (i.e., stop operating).

Then, transmitting the control signal to the control device 40 to control the load 20 to switch from the first state to the second state with the control device 40 according to the received control signal and controlling the power switching device 30 to operate in the second switching mode with the control device 40 to supply power from the second battery pack 12 to the control device 40. In this embodiment, the control interface 423 is operated by the user to transmit the control signal to the control device 40, and the control device 40 would control the switching unit 39 of the relay 30a to switch according to the received control signal so as to control the power switching device 30 to operate in the second switching mode, thereby controlling the load 20 to switch from the fi rst state to the second state (i.e., in operation) and supply power from the second battery pack 12 to the control device 40.

With the aforementioned control method, the control device 40 could utilize the power from the fi rst battery pack 10 and the second battery pack 12 respectively, thereby extendi ng the respective usage ti me of the fi rst battery pack 10 and the second battery pack 12, and reducing the replacement frequency of the batteries. Unnecessary loss due to the parallel-connected first battery pack 10 and second battery pack 12 could be avoided as well.

In practice, after the aforementioned steps, the control method could further include steps of transmitting the control signal to the control device 40 to control the load 20 to switch from the second state to the first state with the control device 40 according to the received control signal, and controlling the power switching device 30 to operate in the first switching mode to supply power from the first battery pack 10 to the control device 40. In this embodiment, the control interface 423 is operated by the user to transmit the control signal to the control device 40, and the control device 40 would control the switching unit 39 of the relay 30a to switch according to the received control signal so as to control the power switching device 30 to operate in the first switching mode, thereby control ling the load 20 to switch from the second state to the fi rst state (i.e., stop operating) and supply power from the fi rst battery pack 10 to the control device 40. Whereby, when the user controls the load 20 to switch between the first state and the second state, the power of the first battery pack 10 and the second battery pack 12 could be utilized alternatively.

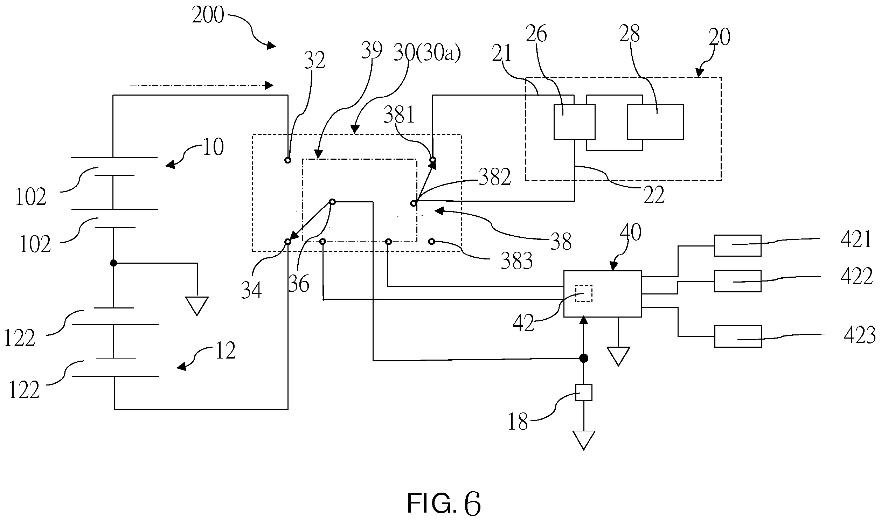

As shown in FIG. 6, a load control system 200 of a second embodiment according to the present invention includes a similar configuration based on the system of the first embodiment but further includes a power storage unit 18, wherein the power storage unit 18 is electrically connected to the power input port 41 of the control device 40 and the power output port 36. In this embodiment, the power storage unit 18 is a capacitor as an example; in practice, rechargeable batteries and other elements which have power storage function could be utilized as well.

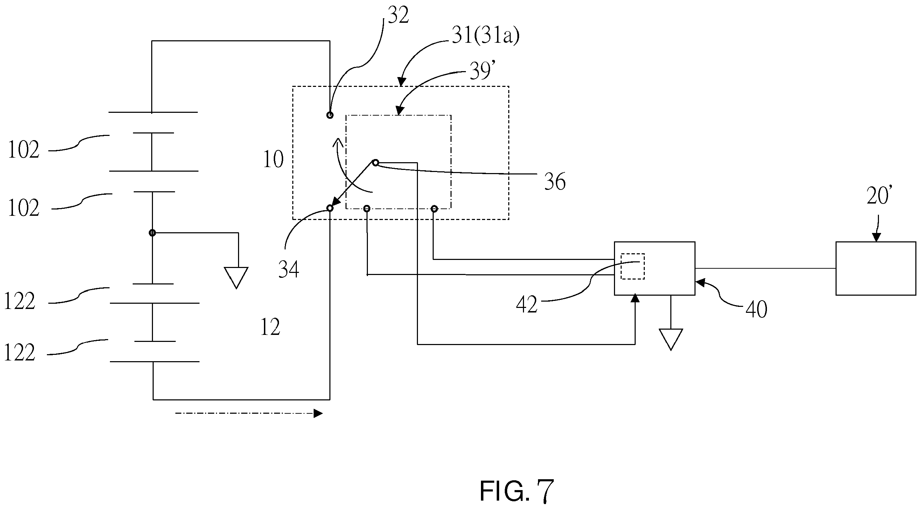

As shown in FIG. 7, a load control system 300 of a third embodiment according to the present invention has almost the same system of the first embodiment mentioned above, except that a relay 31a of a power switching device 31 does not include a control port, and a switching unit 39 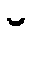 is only adapted to control the conduction state or the cut-off state between the power output port 36 and the fi rst power input port 32 or the second power input port 34, and the control device 40 controls a load 20 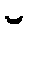 directly through direct connection with the load 20 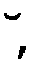 , rather than through the relay 31a of the power switching device 31.

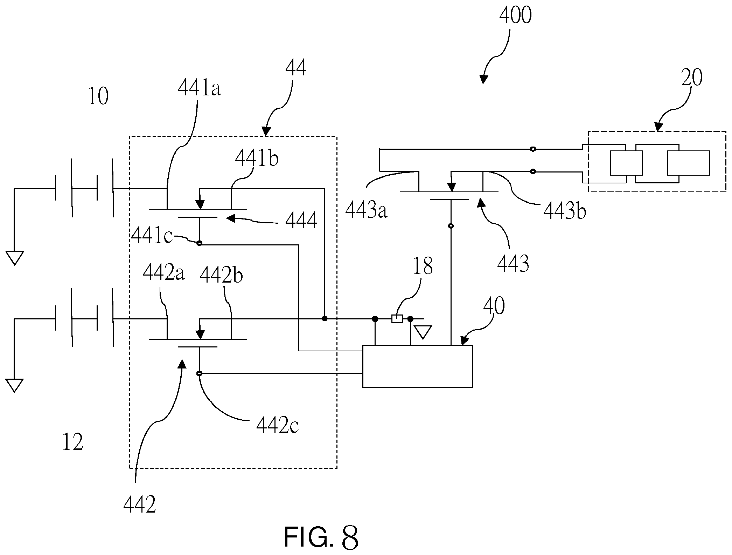

As shown in FIG. 8, a load control system 400 of a fourth embodiment according to the present invention is illustrated. In this embodiment, a power switching device 44 includes a first transistor 441 and a second transistor 442, each of which includes a fi rst terminal 441a, 442a, a second terminal 441b, 442b and a thi rd terminal 441c, 442c, wherein the first terminals 441a, 442a of the first transistor 441 and the second transistor 442 form a first power input port and a second power input port respectively and the first power input port and the second power input port are electrically connected to the positive electrodes of the first battery pack 10 and the second battery pack 12; the second terminal 441b of the fi rst transistor 441 and the second terminal 442b of the second transistor 442 are electrically connected to each other and form a power output port which is electrically connected to the positive terminal of the power input port 41 of the control device 40. The third terminals 441c, 442c of the first transistor 441 and the second transistor 442 are control led by the control device 40 respectively to enable the fi rst terminals 441a, 442a and the second terminals 441b, 442b of the fi rst transistor 441 and the second transistor 442 to be in conduction or cut-off with each other. The first transistor 441 and the second transistor 442 are in the conduction state or the cut-off state to switch the power source of the control device 40, wherein the second terminals 441b, 442b of the first transistor 441 and the second transistor 442 are electrically connected to the positive electrode of the power storage unit 18. In addition, the load 20 controls a third terminal 443c of a third transistor 443 via the control device 40 to enable a first terminal 443a and a second terminal 443b of the third transistor 443 to be in conduction or cut-off with each other so as to control the load 20 to be in the second state or in the fi rst state. Whereby, the control device 40 could be utilized to control the load 20 and the power switching device 44. In practice, the control device 40 could be utilized to control the load 20 directly as described in the second embodiment.

In the aforementioned embodiments, the load could be a variety of appliances, e.g., a lamp, a fan or a street lamp. The control method of the fi rst embodi ment could be applied to the load control system of the second, third and fourth embodiment as well.

According to the illustrati on mentioned above, the control device 40 of the load control system 100 accordi ng to the present i nventi on could utilize the power of the fi rst battery pack 10 and the second battery pack 12 respectively, thereby extendi ng the respective usage time of the fi rst battery pack 10 and the second battery pack 12, and reducing the replacement frequency of the batteries as well.

## Claims

1. A load control system (100, 200, 300, 400), adapted to be connected to at least one first battery (102) and at least one second battery (122) and to control a load (20, 20') to switch between a first state, in which two connecting wires of the load are open-circuited, and a second state, in which the wires of the load are short circuited, wherein the load (20, 20') is powered by an independent power supply; the load control system comprising:
a power switching device (30, 31, 44), including a first power input port (32), a second power input port (34) and a power output port (36), wherein the first power input port (32) is configured to be electrically connected to the at least one first battery (102) and the second power input port (34) is configured to be electrically connected to the at least one second battery (122); the power switching device (30, 31, 44) is controllable to switch between a first switching mode and a second switching mode, wherein the first power input port (32) and the power output port (36) are in conduction with each other in the first switching mode, and the second power input port (34) and the power output port (36) are in conduction with each other in the second switching mode; and
a control device (40), electrically connected to the power output port (36) to receive the power supplied from the power output port (36) to operate; wherein the control device is configured such that,
when the control device (40) operates to receive a control signal, which is generated by a control interface (423) operated by a user, the control device (40) controls the load (20, 20') to switch from one of the first state and the second state to the other one according to the received control signal, and meanwhile controls the power switching device (30, 31, 44) to switch from one of the first switching mode and the second switching mode to the other one;
wherein the power supplied from the power output port (36) is supplied to the control device (40);
wherein the power switching device (30, 31, 44) further includes a relay (30a, 31a) which includes the first power input port (32), the second power input port (34) and the power output port (36);
**characterised in that**
the relay (30a, 31a) further includes a control port (38) which includes two contacts (381, 382) configured to be electrically connected to the two connecting wires (21, 22) is of the load respectively; in the first switching mode, the two contacts (381, 382) are either short-circuited or open-circuited, and in the second switching mode, the two contacts (381, 382) are another one of being open-circuited or short-circuited.

2. The load control system (100, 200, 300, 400) of claim 1, wherein the control device (40) further includes a power detection module (42) to detect the power supplied from the power output port (36).

3. The load control system (200) of claim 1, further comprising a power storage unit (18) which is electrically connected to the power output port (36).

4. The load control system (400) of claim 1, wherein the power switching device (44) further includes a first transistor (441) and a second transistor (442), each of which includes a first terminal (441a, 442a) and a second terminal (441b, 442b) and is controllable to enable the first terminal (441a, 442a) and the second terminal (441b, 442b) to be in conduction or cut-off with each other respectively; the first terminal (441a) of the first transistor (441) forms a first power input port, and the first terminal (442a) of the second transistor (442) forms a second power input port, and the second terminals (441b, 442b) of the first transistor (441) and the second transistor (442) are electrically connected to each other and form a power output port; the control device (40) is electrically connected to the first transistor (441) and the second transistor (442) and controls the first transistor (441) to be in the conduction state and the second transistor (442) to be in the cut-off state so as to enable the power switching device (44) to operate in the first switching mode, or controls the first transistor (441) to be in the cut-off state and the second transistor (442) to be in the conduction state so as to enable the power switching device (44) to operate in the second switching mode.

## Patentansprüche

1. Ein Laststeuersystem (100, 200, 300, 400), welches angepasst ist, um mit mindestens einer ersten Batterie (102) und mindestens einer zweiten Batterie (122) verbunden zu sein und eine Last (20, 20') zu steuern, um zwischen einem ersten Zustand, in welchem zwei Verbindungsdrähte der Last offen sind, und einem zweiten Zustand, in welchem die Drähte der Last kurzgeschlossen sind, umzuschalten, wobei die Last (20, 20') mittels einer unabhängigen Leistungszufuhr betrieben ist, wobei das Laststeuersystem aufweist:
eine Leistungsschaltvorrichtung (30, 31, 44), welche einen ersten Leistungseingangsanschluss (32), einen zweiten Leistungseingangsanschluss (34) und einen Leistungsausgangsanschluss (36) aufweist, wobei der erste Leistungseingangsanschluss (32) konfiguriert ist, um elektrisch mit der mindestens einen ersten Batterie (102) verbunden zu sein und der zweite Leistungseingangsanschluss (34) konfiguriert ist, um elektrisch mit der mindestens einen zweiten Batterie (122) verbunden zu sein; wobei die Leistungsschaltvorrichtung (30, 31, 44) steuerbar ist, um zwischen einem ersten Schaltmodus und einem zweiten Schaltmodus zu schalten, wobei der erste Leistungseingangsanschluss (32) und der Leistungsausgangsanschluss (36) im ersten Schaltmodus miteinander leitend verbunden sind und der zweite Leistungseingangsanschluss (34) und der Leistungsausgangsanschluss (36) im zweiten Schaltmodus miteinander leitend verbunden sind, und
eine Steuervorrichtung (40), welche elektrisch mit dem Leistungsausgangsanschluss (36) verbunden ist, um die Leistung zu empfangen, welche vom Leistungsausgangsanschluss (36) zugeführt worden ist, um zu arbeiten, wobei die Steuervorrichtung konfiguriert ist, sodass,
wenn die Steuervorrichtung (40) arbeitet, um ein Steuersignal zu empfangen, welches mittels einer von einem Benutzer betätigten Steuerschnittstelle (423) erzeugt wird, die Steuervorrichtung (40) die Last (20, 20') steuert, um entsprechend dem empfangenen Steuersignal von einem des ersten Zustands und des zweiten Zustands in den anderen umschaltet, und währenddessen die Leistungsschaltvorrichtung (30, 31, 44) steuert, um von einem des ersten Schaltmodus und des zweiten Schaltmodus in den anderen umzuschalten,
wobei die vom Leistungsausgangsanschluss (36) zugeführte Leistung der Steuervorrichtung (40) zugeführt wird;
wobei die Leistungsschaltvorrichtung (30, 31, 44) ferner ein Relais (30a, 31a) aufweist, welches den ersten Leistungseingangsanschluss (32), den zweiten Leistungseingangsanschluss (34) und den Leistungsausgangsanschluss (36) aufweist,
**dadurch gekennzeichnet, dass** das Relais (30a, 31a) ferner einen Steueranschluss (38) aufweist, welcher zwei Kontakte (381, 382) aufweist, welche konfiguriert sind, um entsprechend zugeordnet mit den zwei Verbindungsdrähten (21, 22) der Last elektrisch verbunden zu sein, wobei im ersten Schaltmodus die zwei Kontakte (381, 382) entweder kurzgeschlossen oder offen sind, und im zweiten Schaltmodus die zwei Kontakte (381, 382) das andere von offen oder kurzgeschlossen sind.

2. Das Laststeuersystem (100, 200, 300, 400) nach Anspruch 1, wobei die Steuervorrichtung (40) ferner ein Leistungserfassungsmodul (42) aufweist, um die vom Leistungsausgangsanschluss (36) zugeführte Leistung zu erfassen.

3. Das Laststeuersystem (200) nach Anspruch 1, welches ferner eine Leistungsspeichereinheit (18) aufweist, welche elektrisch mit dem Leistungsausgangsanschluss (36) verbunden ist.

4. Das Laststeuersystem (400) nach Anspruch 1, wobei die Leistungsschaltvorrichtung (44) ferner einen ersten Transistor (441) und einen zweiten Transistor (442) aufweist, welche jeweils eine erste Endstelle (441a, 442a) und eine zweite Endstelle (441b, 442b) aufweisen und steuerbar sind, um der ersten Endstelle (441a, 442a) und der zweiten Endstelle (441b, 442b) zu ermöglichen, entsprechend zugeordnet miteinander leitend oder sperrend verbunden zu sein, wobei die erste Endstelle (441a) des ersten Transistors (441) einen ersten Leistungseingangsanschluss bildet, und die erste Endstelle (442a) des zweiten Transistors (442) einen zweiten Leistungseingangsanschluss bildet, und die zweiten Endstellen (441b, 442b) des ersten Transistors (441) und des zweiten Transistors (442) elektrisch miteinander verbunden sind und einen Leistungsausgangsanschluss bilden; wobei die Steuervorrichtung (40) elektrisch mit dem ersten Transistor (441) und dem zweiten Transistor (442) verbunden ist und den ersten Transistor (441) steuert, um im Leitungszustand zu sein und den zweiten Transistor (442), um im Sperrzustand zu sein, um der Leistungsschaltvorrichtung (44) zu ermöglichen, im ersten Schaltmodus zu arbeiten, oder den ersten Transistor (441) steuert, um im Sperrzustand zu sein und den zweiten Transistor (442) steuert, um im Leitungszustand zu sein, um der Leistungsschaltvorrichtung (44) zu ermöglichen, im zweiten Schaltmodus zu arbeiten.

## Revendications

1. Système de commande de charge (100, 200, 300, 400), adapté pour être connecté à au moins une première batterie (102) et au moins une deuxième batterie (122) et pour commander une charge (20, 20') afin de commuter entre un premier état, dans lequel deux fils de connexion de la charge sont en circuit ouvert, et un deuxième état, dans lequel les fils de la charge sont court-circuités,
dans lequel la charge (20, 20') est alimentée par une alimentation en puissance indépendante, le système de commande de charge comprenant :
un dispositif de commutation de puissance (30, 31, 44), comprenant un premier port d'entrée de puissance (32), un deuxième port d'entrée de puissance (34) et un port de sortie de puissance (36), dans lequel le premier port d'entrée de puissance (32) est configuré pour être connecté électriquement à ladite au moins une première batterie (102) et le deuxième port d'entrée de puissance (34) est configuré pour être connecté électriquement à ladite au moins une deuxième batterie (122) ; le dispositif de commutation de puissance (30, 31, 44) peut être commandé pour commuter entre un premier mode de commutation et un deuxième mode de commutation, dans lequel le premier port d'entrée de puissance (32) et le port de sortie de puissance (36) sont en conduction l'un avec l'autre dans le premier mode de commutation, et le deuxième port d'entrée de puissance (34) et le port de sortie de puissance (36) sont en conduction l'un avec l'autre dans le deuxième mode de commutation ; et
un dispositif de commande (40), connecté électriquement au port de sortie de puissance (36) pour recevoir la puissance fournie depuis le port de sortie de puissance (36) pour fonctionner ; dans lequel le dispositif de commande est configuré de telle sorte que,
lorsque le dispositif de commande (40) fonctionne pour recevoir un signal de commande, qui est généré par une interface de commande (423) utilisée par un utilisateur, le dispositif de commande (40) commande la charge (20, 20') pour passer d'un parmi le premier état et le deuxième état à l'autre en fonction du signal de commande reçu, et commande entre-temps le dispositif de commutation de puissance (30, 31, 44) pour passer d'un parmi le premier mode de commutation et le deuxième mode de commutation à l'autre ;
dans lequel la puissance fournie depuis le port de sortie de puissance (36) est fournie au dispositif de commande (40) ;
dans lequel le dispositif de commutation de puissance (30, 31, 44) comprend en outre un relais (30a, 31a) qui comprend le premier port d'entrée de puissance (32), le deuxième port d'entrée de puissance (34) et le port de sortie de puissance (36) ;
**caractérisé en ce que**
le relais (30a, 31a) comprend en outre un port de commande (38) qui comprend deux contacts (381, 382) configurés pour être connectés électriquement aux deux fils de connexion (21, 22) de la charge, respectivement ; dans le premier mode de commutation, les deux contacts (381, 382) sont soit en court-circuit, soit en circuit ouvert, et dans le deuxième mode de commutation, les deux contacts (381, 382) sont l'autre parmi étant en circuit ouvert ou en court-circuit.

2. Système de commande de charge (100, 200, 300, 400) selon la revendication 1, dans lequel le dispositif de commande (40) comprend en outre un module de détection de puissance (42) pour détecter la puissance fournie depuis le port de sortie de puissance (36).

3. Système de commande de charge (200) selon la revendication 1, comprenant en outre une unité de stockage de puissance (18) qui est connectée électriquement au port de sortie de puissance (36).

4. Système de commande de charge (400) selon la revendication 1, dans lequel le dispositif de commutation de puissance (44) comprend en outre un premier transistor (441) et un deuxième transistor (442), dont chacun comprend une première borne (441a, 442a) et une deuxième borne (441b, 442b) et peut être commandé pour permettre à la première borne (441a, 442a) et à la deuxième borne (441b, 442b) d'être respectivement en conduction ou en coupure l'une avec l'autre ; la première borne (441a) du premier transistor (441) forme un premier port d'entrée de puissance, et la première borne (442a) du deuxième transistor (442) forme un deuxième port d'entrée de puissance, et les deuxièmes bornes (441b, 442b) du premier transistor (441) et du deuxième transistor (442) sont connectées électriquement l'une à l'autre et forment un port de sortie de puissance ; le dispositif de commande (40) est connecté électriquement au premier transistor (441) et au deuxième transistor (442) et commande le premier transistor (441) pour être dans l'état de conduction et le deuxième transistor (442) pour être dans l'état de coupure afin de permettre au dispositif de commutation de puissance (44) de fonctionner dans le premier mode de commutation, ou commande le premier transistor (441) pour être dans l'état de coupure et le deuxième transistor (442) pour être dans l'état de conduction afin de permettre au dispositif de commutation de puissance (44) de fonctionner dans le deuxième mode de commutation.
